# EUROPÄISCHE PATENTSCHRIFT

(11) **EP 2 230 107 B1**
(45) Veröffentlichungstag und Bekanntmachung des Hinweises auf die Patenterteilung: **22.02.2012**
(21) Anmeldenummer: 09015690.2
(22) Anmeldetag: 18.12.2009
(51) Int. Cl.: B60G 3/06, B60G 7/02, B60G 11/23, B60G 11/38

(54) **Radaufhängung für ein Geländefahrzeug**
Wheel suspension for an off-road vehicle
Suspension de roue pour un véhicule terrestre

(30) Priorität: 19.03.2009 DE 102009013539
(43) Veröffentlichungstag der Anmeldung: 22.09.2010
(73) Patentinhaber: CLAAS Industrietechnik GmbH, 33106 Paderborn (DE)
(72) Erfinder: Stember, Tobias, 33142 Büren (DE); Loeneke, Markus, 33142 Büren (DE)

(56) Entgegenhaltungen:
- GB-A- 1 505 925
- US-A- 3 520 554
- US-A1- 2004 169 347

## Beschreibung

Die vorliegende Erfindung betrifft eine Radaufhängung für ein Kraftfahrzeug, insbesondere für ein Geländefahrzeug.

Es ist an sich bekannt, die Lenkdrehachse eines gelenkten Fahrzeugrades mit dem Fahrzeugrahmen über im Wesentlichen horizontal ausgerichtete Querlenker zu varbinden, die mit der Lenkdrehachse sowie mit dem Fahrzeugrahmen um in Fahrzeuglängsrichtung verlaufende Achsen schwenkbar verbunden sind. Ein Stoßdämpfer bzw. ein Federbein, das an dem Querlenker angreift, ermöglicht eine Abbremsung einer vertikalen Auslenkung des Rades in Bezug zum Fahrzeugrahmen und damit die Dämpfung von Erschütterungen, die auf Unebenheiten der Fahrbahn zurückgehen. Stößen, die in horizontaler Richtung wirken, kann der Querlenker nicht nachgeben, so dass diese im Wesentlichen ungedämpft auf den Fahrzeugrahmen übertragen werden.

Aus der gattungsbildenden EP 1 535 766 A1 ist eine Radaufhängung bekannt, bei der ein hülsenförmiges Pufferelement aus Elastomermaterial in einer Bohrung eines Haltekopfs des Querlenkers zwischen diesem und einem sich in der Bohrung erstreckenden Gelenkbolzen angebracht ist. Das Pufferelement ermöglicht in gewissem Umfang eine Bewegung des Gelenkbolzens in radialer Richtung relativ zum Haltekopf und damit auch die Dämpfung von horizontal wirkenden Stößen.

Das Pufferalement einer solchen Radaufhängung ist jedoch aufgrund der Schwenkbewegungen des Querlenkers ständigen Torsionsbeanspruchungen ausgesetzt, die einen schnellen Verschleiß oder, bei Überschreitung einer Belastungsobergrenze, die sofortige Zerstörung des Pufferelements zur Folge haben können.

Eine Torsionsüberbeanspruchung des Pufferelements könnte vermieden werden, in dem zwischen ihm und dem es umgebenden Haltekopf des Querlenkers oder dem durch es hindurch laufenden Gelenkbolzen ein Lager vorgesehen wird. Ein solches Lager kann das Pufferelement von der Torsionsbelastung befreien, jedoch beeinträchtigt die Durchmesservergrößerung des Haltekopfes, die sur Unterbringung des Lagers erforderlich ist, die Bodenfreiheit des Fahrzeugs, was insbesondere bei einem geländegängigem Fahrzeug störend ist. Ein ineinander geschachtelter Aufbau von Pufferelement und Lager macht außerdem im Bedarfsfall Reparaturen schwierig.

Aufgabe der Erfindung ist, eine Radaufhängung für ein Geländefahrzeug zu schaffen, die eine große Schwenkbewegungsfreiheit des Querlenkers mit der Fähigkeit, auch horizontale Stöße zu dämpfen, einer langen störungsfreien Betriebsdauer und einer großen Bodenfreiheit kombiniert.

Die Aufgabe wird mit eines Ausführung gemäβ den kennzereiweiden den Merknalen des Anspruchs 1gelöst, gelöst, Indem so das Pufferelement und das Lager axial benachbart anstatt radial geschachtelt am Gelenkbolzen Platz finden, können die vorteilhaften Wirkungen beider genutzt werden, ohne eine unerwünschte Durchmesservergrößerung eines Haltekopfs und die damit verbundene Einschränkung der Bodenfreiheit in Kauf nehmen zu müssen. Darüber hinaus ermöglicht die axial versetzte Anordnung einen erleichterten Zugriff auf das Pufferelement oder das Lager, falls eine Reparatur des einen oder anderen nötig ist.

Um den Durchmesser des anderen Haltekopfs klein und dementsprechend die Bodenfreiheit des Fahrzeugs groß halten zu können, sind Lagertypen mit einem großen Verhältnis von Innen- zu Außendurohmesser wie etwa Gleitlager oder Nadellager bevorzugt.

Zur verbesserung der Stabilität sind am Querlenker zwei Halteköpfe vorgesehen, die beiderseits des Haltekopfs des Fahrzeugrahmens an dem Gelenkbolzen angreifen.

In diesem Fall sind vorzugsweise zwei hülsenförmige Pufferelemente zwischen den beiden Halteköpfen des Querlenkers und dem Gelenkbolzen angeordnet, während das Lager zwischen dem Haltekopf des Fahrzeugrahmens und dem Gelenkbolzen angeordnet ist. Durch die Verdopplung der Pufferelemente kann deren Belastung reduziert und ihre Verschleißneigung verringert werden.

Um eine stabile Radaufhängung zu gewährleisten, ist es ferner zweckmäßig, wenn der Querlenker eine gabelartige Gestalt mit zwei an verschiedenen Halteköpfen des Fahrzeugrahmens um eine gleiche Achse schwenkbar angreifenden Armen besitzt. Das Pufferelement und das Lager sind dann vorzugsweise jeweils zwischen jedem Arm und dem dazugehörigen Haltekopf des Fahrzeugrahmens vorgesehen, wobei sie an einem der Arme ein Festlager und am anderen Arm ein Loslager bilden.

Um ein Festlager zu bilden, kann die Radaufhängung wenigstens zwei elastische Pufferelementabschnitte mit entgegengesetzter Konizität aufweisen. Diese Pufferelementabschnitte können zu zwei verschiedenen Pufferelementen, die sich auf entgegengesetzten Seiten des Lagers gegenüberliegen oder zu einem gleichen Pufferalement gehören, etwa in Form von zwei Hälften einer Hohlkugel.

Im Falle eines Loslagers ist das Pufferelement zweckmäßigerweise hohlzylindrisch geformt.

Um die Belastbarkeit des Pufferelements bei einem starken Stoß zu verbessern, kann zur Stabilisierung zwischen zwei aus elastischem Material bestehenden Schichten des Pufferelements eine Zwischenschicht aus einem im Wesentlichen nicht dehnbaren Material vorgesehen sein.

Am Lager können gegeneinander bewegliche sphärische Oberflächen vorgesehen sein, die gegebenenfalls eine Gier- oder Nickbewegung des Gelenkbolsens zulassen. Gegeneinander axial bewegliche zylinderische Oberflächen des Lagers ermöglichten eine axiale Ausweichbewegung des Gelenkbolzens. Um beide Bewegungsmöglichkeiten zu kombinieren, kann das Lager einen Ring umfassen, von dessen Außen- und Innenfläche die eine sphärisch und die andere zylindrisch ist.

Weitere Merkmale und vorteile der Erfindung ergeben sich aus der nachfolgenden Beschreibung von Ausführungsbeispielen unter Bezugnahme auf die beigefügten Figuren. Es zeigen:
- Fig. 1: eine schematische perspektivische Dar- stellung einer erfindungsgemäßen Radauf- hängung,
- Fig. 2: einen Schnitt durch die Gelenkbolzen und Halteköpfe der in Fig. 1 dargestellten Radaufhängung.

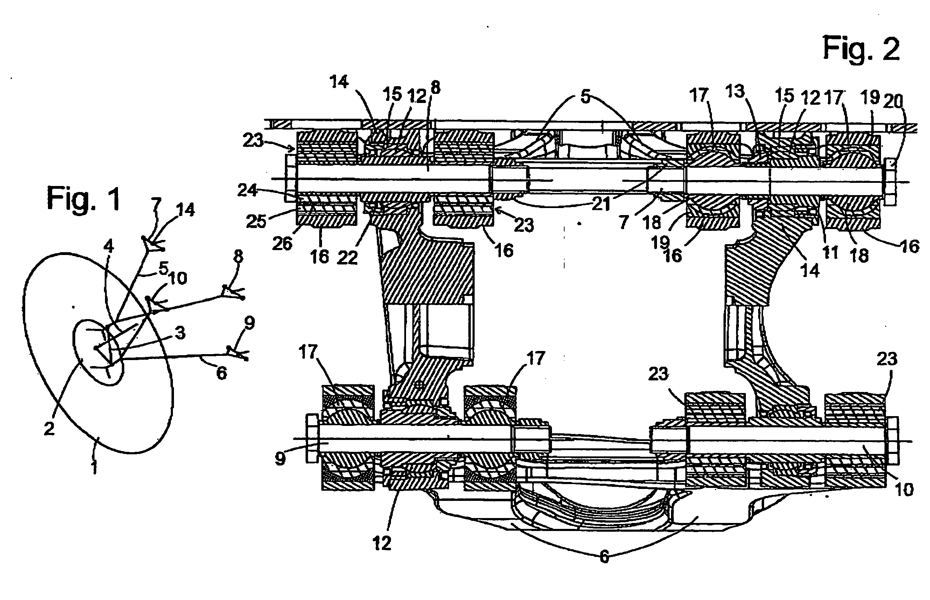

Fig. 1 zeigt in einer schematischen perspektivischen Ansicht eine Aufhängung eines Vorderrades eines Geländefahrzeugs. Das Rad 1 ist durch eine nicht dargestellte Antriebswelle um eine drehfeste Radnabe 2 herum drehangetrieben. Die Radnabe 2 ist starr mit einer im Wesentlichen vertikalen Lenkdrehachse 3 verbunden, an der in dem Fachmann vertrauter Weise eine Lenkschubstange 4 angreift. Obere und untere Enden der Lenkdrehachse 3 sind mit einem oberen Querlenker 5 bzw, einem unteren Querlenker 6 gelenkig verbunden. Die Querlenker 5, 6 sind v-förmig mit zwei Armen, die von ihrer gemeinsamen Gelenkverbindung mit der Lankdrehachse 3 in Richtung eines (nicht dargestellten) Fahrzeugrahmens divergieren. Mit dem Fahrzeugrahmen sind die Arme um in Fahrzeuglangsriehtung ausgerichtete Gelenkbolzen 7, 8, 9, 10 schwenkbar verbunden. Ein in der Figur nicht dargestellter, im wesentlichen vertikal ausgerichteter Stoßdämpfer greift in an sich bekannter Weise am unteren Querlenker 6 an, um vertikale Auslenkungen des Rades 1 gegen den Fahrzeugrahmen zu dämpfen.

Fig. 2 zeigt im Detail einen Schnitt durch die Radaufhängung der Fig. 1 entlang einer durch die Achsen der vier Gelenkbolzen 7 bis 10 verlaufenden Ebene. Der in Fahrtrichtung vordere obere Gelenkbolzen 7 trägt eine Stahlhülse 11 mit gestuftem Außendurchmesser, auf die ein Ring 12 mit zylindrischer Innenfläche und sphärischer Außenfläche aufgeschoben und durch eine an der Stahlhülse 11 angreifende Kontermutter 13 axial fixiert ist.

Den Ring 12 umgibt ein in einem Haltekopf 14 des Fahrzeugrahmens axial fixierter Ring 15, dessen Innenfläche komplementär zur Außenfläche des Rings 12 konkav sphärisch gewölbt ist . Die sich berührenden Flächen der Ringe 12, 15 könnten mit einer reibungsvermindernden Beschichtung, z. B. aus Polytetrafluorethylen, versehen sein, um eine Drehung des Gelenkbolzens 7 relativ zum Haltekopf 14 zu ermöglichen.

Zwischen dem Gelenkbolzen 7 und Halteköpfen 16 eines vorderen Arms des oberen Querlenkers 5 sind Pufferelemente 17 aus Gummi eingespannt, Die Pufferelemente 17 haben hier jeweils die Form einer Hohlkugel, die zwischen einer sphärisch gekrümmten Außenfläche einer auf den Gelenkbolzen 7 aufgeschobenen Hülse 18 und einer hohlkugelförmigen Innenfläche einer im Haltekopf 16 eingespannten Hülse 19 eingeschlossen ist. Die zwei Hülse 18 und die gestufte Hülse 11 sind am Gelenkbolzen 7 zwischen einem Kopf 20 und einer aufgeschraubten Mutter 21 eingespannt und axial fixiert.

Eine Schwenkbewegung des Querlenkers 5 um die von den Gelenkbolzen 7, 8 definierte Achse führt zu einer Torsionsbeanspruchung der Pufferelemente 17, doch kann diese nicht größer werden als das zum überwinden der Reibung zwischen den Ringen 12, 15 erforderliche Drehmoment.

Eine in Längsrichtung des Gelenkbolzens 7 auf den querlenker 5 einwirkende Kraft führt zu einer axialen Verschiebung der Halteköpfe 16 in Bezug zum Gelenkbolzen 7 und einer entsprechenden Verformung der Pufferelemente 17. Aufgrund der Hohlkugelform der Pufferelemente wird durch die Längsverschiebung jeweils eine Hälfte von beiden Pufferelementen gestaucht. Die zwei Hohlkugelformen könnte durch zwei spiegelbildlich angeordnete Hohlhalbkugeln oder Hohlkegel ersetzt werden; in diesem Falle würde bei einer axialen Verschiebung jeweils nur eines der Pufferelemente gestaucht. In Bezug auf den Haltekopf 14 des Fahrzeugrahmens ist der Gelenkbolzen 7 durch die axiale Fixierung des Rings 12 und den fonnsohlüssigen Eingriff der Ringe 12, 15 ineinander unbeweglich.

Einem vom Querlenker 5 übertragenen Drehmoment in Richtung seiner Längsachse kann der Gelenkbolzen 7 aufgrund der sphärischen Gestalt der sich berührenden Flächen der Ringe 12, 14 durch eine Schwenkbewegung um eine zu seiner Längachse senkrechte Achse ausweichen. Dadurch verteilen sich die zwischen dem Gelenkbolzen 7 und den Halteköpfen 16 wirkenden Kräfte zu gleichen Teilen auf die beiden Pufferelemente 17, und die Gefahr einer Überlastung eines der beiden Pufferelemente 17 ist gering.

Der in Fahrtrichtung hintere obere Gelenkbolzen 8 trägt in Höhe des ihn umgreifenden Haltekopfs 14 des Fahrzeugrahmens ebenfalls Ringe 12, 15 mit sich berührenden und gegeneinander verschiebbaren sphärischen Oberflächen. Der innere Ring 12 ist hier jedoch seinerseits auf einer den Gelenkbolzen 8 umgebenden zylindrischen Hülse 22 axial verschiebbar, so dass sich zwischen den beiden Gelenkbolzen 7, 8 keine axialen Spannungen ausbilden können, die zu einer unnötigen Belastung und erhöhtem Reibverschleiß der gegeneinander beweglichen Oberflächen der Ringe 12, 15 führen würden.

Beiderseits des von den Ringen 12, 15 gebildeten Gleitlagers sind hohlzylindrische Pufferelemente 23 auf den Gelenkbolzen 8 aufgeschoben, die von Halteköpfen 16 des hinteren Arms des oberen Querlenkers 5 umgriffen sind. Die Pufferelemente 23 umfassen jeweils einen inneren Gummiring 24, einen äußeren Gummiring 25 und eine dünne Hülse 26 aus Metall zwischen beiden. Die Hülse 26 bewirkt eine Versteifung des Pufferelements 23 im Vergleich zu einem Pufferelement mit gleichen Abmessungen, das einteilig aus Gummi gefertigt ist. Es kann daher zur Erzielung einer gewünschten Steifigkeit des Pufferelements 23 ein relativ gut verformbares und dementsprechend gegen Scherbeanspruchungen beständiges Material für die Gummiringe 24, 25 verwendet werden.

Der Aufbau der die unteren Gelenkbolzen 9, 10 umgebenden Lager ist im Wesentlichen der gleiche wie an den oberen Gelenkbolzen 7, 8. Da der untere Querlenker 6 starker belastet ist als der obere 5 und dementsprechend auch sichtbar stärker als dieser aufgeführt ist, sind die Lagerkomponenten, die den untere Querlenker 6 mit dem Fahrzeugrahmen verbinden, kräftiger als ihre Gegenstücke am oberen Querlenker 5. Ansonsten sind lediglich vorne und hinten vertauscht, d.h. am unteren hinteren Gelenkbolzen 9 ist der an seiner Außenseite sphärische Ring 12 axial fixiert, um ein Festlager zu bilden, und die Pufferelemente 17 sind sphärisch, um einer axialen Auslenkung des Querlenkers 6 einen hohen Widerstand entgegen setzen zu können, wohingegen am vorderen unteren Gelenkbolzen 10 der Ring 12 axial verschiebbar ist, um ein Loslager zu bilden, und hohlzylindrische Pufferelemente 23 einer Längsauslen kung allenfalls geringen Widerstand entgegensetzen.

### Bezugszeichen

- 1: Rad
- 2: Radnabe
- 3: Lenkdrehachse
- 4: Lenkschubstange
- 5,6: Querlenker
- 7-10: Gelenkbolsen
- 11: Stahlhülse
- 12: Ring
- 13: Kontermutter
- 14: Haltekopf
- 15: Ring
- 16: Haltekopf
- 17: Pufferelement
- 18, 19: Hülse
- 20: Kopf
- 21: Mutter
- 22: Hülse
- 23: Pufferelement
- 24, 25: Gummiring
- 26: Hülse

## Patentansprüche

1. Radaufhängung für ein Geländefahrzeug mit einem Querlenker (5, 6), wenigstens einem Gelenkbolzen (7, 8, 9, 10) und wenigstens einem an einem Fahrzeugrahmen festen Haltekopf (14) für den Gelenkbolzen (7, 8, 9, 10), wobei ein Haltekopf (16) des Querlenkers (5, 6) und der Haltekopf (14) des Fahrzeugrahmens In axialer Richtung des Gelenkbolzens versetzt am Gelenkbolzen (7, 8, 9, 10) angreifen, sowie mit einem elastischen Pufferelement (17, 23), das zwischen dem Gelenkbolzen (7, 8, 9, 10) und einem der Halteköpfe (16) angebracht ist, **dadurch gekennzeichnet, dass** der Gelenkbolzen (7, 8, 9, 10) und der an dem Fahrzeugrahmen feste Haltekopf (14) durch ein Lager (12, 15) drehbar miteinander verbunden sind und der Querlenker (5, 6) zwei Halteköpfe (16) beiderseits des Haltekopfs (14) des Fahrzeugrahmens aufweist, wobei die Halteköpfe (16) dem jeweiligen Gelenkbolzen (7,8,9,10) umgreifen.

2. Radaufhängung nach Anspruch 1, **dadurch gekennzeichnet, dass** das Lager ein Gleitlager oder ein Nadellager ist.

3. Radaufhängung nach Anspruch 2, **dadurch gekennzeichnet, dass** zwei Pufferelemente (17, 23) zwischen den HalteKöpfen (16) des Querlenkers (5, 6) und dem Gelenkbolzen (7, 8, 9, 10) und das Lager (12, 15) zwischen dem Haltekopf (14) des Fahrzeugrahmens und dem Gelenkbolzen (7, 8, 9, 10) angeordnet ist.

4. Radaufhängung nach einem der vorhergehenden Ansprüche, **dadurch gekennzeichnet, dass** der Querlenker (5, 6) zwei an verschiedenen Halteköpfen (14) des Fahrzeugrahmens um eine gleiche Achse schwenkbar angreifende Arme besitzt, dass das Pufferelement (17, 23) und das Lager (12, 15) zwischen jedem der beiden Arme und den belden Halteköpfen (14) des Fahrzeugrahmens vorgesehen sind und an einem der Arme ein Festlager und am anderen Arm ein Loslager bilden.

5. Radaufhängung nach einem der vorhergehenden Ansprüche, **dadurch gekennzeichnet, dass** sie wenigstens zwei Pufferelementabschnftte mit entgegengesetzter Konizität aufweist.

6. Radaufhängung nach einem der Ansprüche 1 bis 4, **dadurch gekennzeichnet, dass** das Pufferelement (23) hohlzylindrisch geformt ist.

7. Radaufhängung nach einem der vorhergehenden Ansprüche, **dadurch gekennzeichnet, dass** das Pufferelement (23) zwischen zwei Schichten (24, 25) aus elastischem Material eine Zwischenschicht (26) aus einem im Wesentlichen nicht dehnbaren Material aufweist.

8. Radaufhängung nach einem der vorhergehenden Ansprüche, **dadurch gekennzeichnet, dass** das Lager (12, 15) gegeneinander bewegliche sphärische Oberflächen umfasst.

9. Radaufhängung nach einem der vorhergehenden Ansprüche, **dadurch gekennzeichnet, dass** das Lager (12, 15, 22) gegeneinander bewegliche zylindrische Oberflächen umfasst.

10. Radaufhängung nach einem der vorhergehenden Ansprüche, **dadurch** gekennzelchnet dass das Lager einen Ring (12; 18) mit einer Innen- und einer Außenflä-. che umfasst, von denen die eine sphärisch und die andere zylindrisch ist.

## Claims

1. A wheel suspension for an off-road vehicle comprising a transverse link (5, 6), at least one pivot pin (7, 8, 9, 10) and at least one holding head (14) which is fixed to a vehicle frame, for the pivot pin (7, 8, 9, 10), wherein a holding head (16) of the transverse link (5, 6) and the holding head (14) of the vehicle frame engage the pivot pin (7, 8, 9, 10) in displaced relationship in the axial direction of the pivot pin, and an elastic buffer element (17, 23) mounted between the pivot pin (7, 8, 9, 10) and one of the holding heads (16), **characterised in that** the pivot pin (7, 8, 9, 10) and the holding head (14) fixed to the vehicle frame are rotatably connected together by a bearing (12, 15) and the transverse link (5, 6) has two holding heads (16) on the two sides of the holding head (14) of the vehicle frame, wherein the holding heads (16) embrace the respective pivot pin (7, 8, 9, 10).

2. A wheel suspension according to claim 1 **characterised in that** the bearing is a plain bearing or a needle bearing.

3. A wheel suspension according to claim 2 **characterised in that** two buffer elements (17, 23) are arranged between the holding heads (16) of the transverse link (5, 6) and the pivot pin (7, 8, 9, 10) and the bearing (12, 15) is arranged between the holding head (14) of the vehicle frame and the pivot pin (7, 8, 9, 10).

4. A wheel suspension according to one of the preceding claims **characterised in that** the transverse link (5, 6) has two arms which engage pivotably about the same axis different holding heads (14) of the vehicle frame, the buffer element (17, 23) and the bearing (12, 15) are provided between each of the two arms and the two holding heads (14) of the vehicle frame and form a fixed bearing at one of the arms and a loose bearing at the other arm.

5. A wheel suspension according to one of the preceding claims **characterised in that** it has at least two buffer element portions of opposite conicity.

6. A wheel suspension according to one of claims 1 to 4 **characterised in that** the buffer element (23) is of a hollow-cylindrical shape.

7. A wheel suspension according to one of the preceding claims **characterised in that** the buffer element (23) has between two layers (24, 25) of elastic material an intermediate layer (26) of a substantially non-stretchable material.

8. A wheel suspension according to one of the preceding claims **characterised in that** the bearing (12, 15) includes spherical surfaces which are movable relative to each other.

9. A wheel suspension according to one of the preceding claims **characterised in that** the bearing (12, 15) includes cylindrical surfaces which are movable relative to each other.

10. A wheel suspension according to one of the preceding claims **characterised in that** the bearing includes a ring (12; 15) having an inside and an outside surface, of which one is spherical and the other cylindrical.

## Revendications

1. Suspension de roue pour un véhicule tout-terrain, comprenant un bras de suspension (5, 6), au moins un boulon d'articulation (7, 8, 9, 10) et au moins une tête de retenue (14) solidaire d'un châssis de véhicule pour le boulon d'articulation (7, 8, 9, 10), une tête de retenue (16) du bras de suspension (5, 6) et la tête de retenue (14) du châssis de véhicule agissant sur le boulon d'articulation (7, 8, 9, 10) de manière décalée en direction axiale du boulon d'articulation, et comprenant un élément tampon élastique (17, 23) qui est monté entre le boulon d'articulation (7, 8, 9, 10) et une des têtes de retenue (16), **caractérisée en ce que** le boulon d'articulation (7, 8, 9, 10) et la tête de retenue (14) solidaire du châssis de véhicule sont reliés entre eux de manière mobile en rotation par un palier (12, 15), et le bras de suspension (5, 6) comporte deux têtes de retenue (16) de chaque côté de la tête de retenue (14) du châssis de véhicule, les têtes de retenue (16) entourant le boulon d'articulation (7, 8, 9, 10) respectif.

2. Suspension de roue selon la revendication 1, **caractérisée en ce que** le palier est un palier lisse ou un roulement à aiguilles.

3. Suspension de roue selon la revendication 2, **caractérisée en ce que** deux éléments tampons (17, 23) sont disposés entre les têtes de retenue (16) du bras de suspension (5, 6) et le boulon d'articulation (7, 8, 9, 10), et le palier (12, 15) est disposé entre la tête de retenue (14) du châssis de véhicule et le boulon d'articulation (7, 8, 9, 10).

4. Suspension de roue selon une des revendications précédentes, **caractérisée en ce que** le bras de suspension (5, 6) possède deux bras qui agissent de manière pivotante autour d'un même axe sur des têtes de retenue (14) différentes du châssis de véhicule, et **en ce que** l'élément tampon (17, 23) et le palier (12, 15) sont prévus entre chacun des deux bras et les deux têtes de retenue (14) du châssis de véhicule et forment un palier fixe sur un des bras et un palier libre sur l'autre bras.

5. Suspension de roue selon une des revendications précédentes, **caractérisée en ce qu'**elle comporte au moins deux portions d'élément tampon de conicité opposée.

6. Suspension de roue selon une des revendications 1 à 4, **caractérisée en ce que** l'élément tampon (23) est conformé en cylindre creux.

7. Suspension de roue selon une des revendications précédentes, **caractérisée en ce que** l'élément tampon (23) comporte entre deux couches (24, 25) de matériau élastique une couche intermédiaire (26) dans un matériau essentiellement non extensible.

8. Suspension de roue selon une des revendications précédentes, **caractérisée en ce que** le palier (12, 15) comprend des surfaces sphériques mobiles l'une par rapport à l'autre.

9. Suspension de roue selon une des revendications précédentes, **caractérisée en ce que** le palier (12, 15, 22) comprend des surfaces cylindriques mobiles l'une par rapport à l'autre.

10. Suspension de roue selon une des revendications précédentes, **caractérisée en ce que** le palier comprend une bague (12 ; 15) avec une surface intérieure et une surface extérieure, dont une est sphérique et l'autre cylindrique.
